# NEUE EUROPÄISCHE PATENTSCHRIFT

(11) **EP 2 622 004 B2**
(45) Veröffentlichungstag und Bekanntmachung des Hinweises auf die Entscheidung über den Einspruch: **14.02.2018**
(45) Hinweis auf die Patenterteilung: 16.07.2014
(21) Anmeldenummer: 11760750.7
(22) Anmeldetag: 15.09.2011
(51) Int. Cl.: C08G 77/58, C09D 183/14

(54) **VERNETZBARE ORGANOPOLYSILOXANZUSAMMENSETZUNG**
CURABLE ORGANOPOLYSILOXANE COMPOSITION
COMPOSITIONS D'ORGANOPOLYSILOXANE RÉTICULABLES

(30) Priorität: 29.09.2010 DE 102010041676
(43) Veröffentlichungstag der Anmeldung: 07.08.2013
(73) Patentinhaber: Wacker Chemie AG, 81737 München (DE)
(72) Erfinder: HELDMANN, Dieter, 84489 Burghausen (DE)
(74) Vertreter: Budczinski, Angelika
(86) Internationale Anmeldenummer: PCT/EP2011/065976
(87) Internationale Veröffentlichungsnummer: WO 2012/041708

(56) Entgegenhaltungen:
- EP-A1- 1 104 780
- DE-A1- 10 045 503
- US-A- 3 898 176

## Beschreibung

Die vorliegende Erfindung betrifft vernetzbare Organopolysiloxanzusammensetzungen, Verfahren zu deren Herstellung sowie deren Verwendung, insbesondere als hitzestabile bzw. vor Korrosion schützende Beschichtungen.

US-A 3,846,359 lehrt Beschichtungszusammensetzungen enthaltend ein Alkylsilikat und/oder ein Alkylpolysilikat, ein Alkyltitanat und/oder ein Alkylpolytitanat, ein filmbildendes Harz wie ein Siliconharz und übliche Lösungsmittel, welche durch Lufttrocknung aushärten.

In WO-A 2007/077130 werden Beschichtungsmittelzusammensetzungen enthaltend ein Siliconharz, Alkyltitanate, Aluminiumpigmente, weitere Pigmente und Füllstoffe sowie optional Alkylsilikate beschrieben.

JP-A 2008156427 lehrt Beschichtungsmittelzusammensetzungen enthaltend Alkohole, Silikate, Fluoralkylsilane und Alkylsilane sowie verschiedene Stabilisatoren, darunter Titanchelate.

Das Dokument US 3 898 176 betrifft Zusamensetzungen, die ein Organopolysiloxan und z.B. Triethanolamin Titanat.

Das Dokument EP 1 104 780 offenbart Organosiloxanmassen und deren Verwendung z.B. als Klebstoffe. Im Vergleichsbeispiel 1 wird z.B. Diisopropoxy-bisethylacetessigester-Titanat in solchen Massen enthalten.

Das Dokument DE 10 2009 045 503 offenbart vernetzbare Massen, die Füllstoffe enthalten können, und Formkörper auf Basis diesen Zusammensetzungen. Im Beispiel 8 wird Diisobutoxy-bis-ethylacetoacetato-Titan zugefügt.

Gegenstand der Erfindung sind vernetzbare Organopolysiloxanzusammensetzungen herstellbar unter Verwendung von (A) Organopolysiloxan bestehend aus Einheiten der allgemeinen Formel

RₐSi(OR¹)_{b}O_{(4-a-b)/2} (1),

wobei
R gleich oder verschieden sein kann und einen einwertigen Kohlenwasserstoffrest darstellt,
R¹ gleich oder verschieden sein kann und einen einwertigen, gegebenenfalls substituierten Kohlenwasserstoffrest darstellt, der durch Heteroatome unterbrochen sein kann,
a 0, 1, 2 oder 3 ist und
b 0, 1, 2 oder 3 ist,
mit der Maßgabe, dass die Summe a+b≤3 ist, in mindestens einer Einheit b verschieden 0 ist und in mehr als 50 %, besonders bevorzugt in mehr als 80% aller Einheiten der Formel (1) im Organopolysiloxan a gleich 1 ist, wobei Organopolysiloxane (A) bei 25 °C und dem Druck der umgebenden Atmosphäre, also 900 bis 1100 hPa, flüssig sind und
(B) mindestens einem Titanchelatkomplex.

Beispiele für Rest R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α- und der ß -Phenylethylrest.

### gestrichen

Bevorzugt handelt es sich bei Rest R um Kohlenwasserstoffreste mit 1 bis 18 Kohlenstoffatomen, besonders bevorzugt um Kohlenwasserstoffreste mit 1 bis 6 Kohlenstoffatomen, insbesondere um den Methyl- und den Phenylrest, ganz besonders bevorzugt um den Methylrest.

Beispiele für Rest R¹ sind die für den Rest R angegebenen Reste.

Bevorzugt handelt es sich bei Rest R¹ um Kohlenwasserstoffreste mit 1 bis 18 Kohlenstoffatomen, besonders bevorzugt um Kohlenwasserstoffreste mit 1 bis 8 Kohlenstoffatomen, insbesondere um Methyl- oder Ethylreste.

Bevorzugt ist der durchschnittliche Wert für a 0,8 bis 1,5.

Bevorzugt ist der durchschnittliche Wert für b 0,5 bis 1,5.

Bei der erfindungsgemäß eingesetzten Komponente (A) handelt es sich um Organopolysiloxane aus Einheiten der Formel (1), bei denen in mehr als 50 %, besonders bevorzugt in mehr als 80 %, der Einheiten im Harz a gleich 1 ist.

Vorzugsweise besteht das erfindungsgemäß eingesetzte Organopolysiloxan (A) aus M-(≡SiO_{1/2}), D-(=SiO_{2/2}), T-(-SiO_{3/2}) und/oder Q-(SiO_{4/2}) Einheiten, bevorzugt im Wesentlichen aus M-, D- und T-Einheiten, besonders bevorzugt aus M-, D- und T-Einheiten.

Besonders bevorzugt handelt es sich bei Komponente (A) um Organopolysiloxane, die im Wesentlichen Einheiten mit nur einer Si-C-Bindung enthalten, was a=1 entspricht, das Polyorganosiloxan ist zu mehr al 50 %, besonders bevorzugt zu mehr als 80 % aus Einheiten der Formel (1) zusammengesetzt, für die a gleich 1 ist,. Bevorzugt enthalten die Organopolysiloxane (A) außerdem von 0,1 bis 35 Gew.-% freie Alkoxygruppen. Des Weiteren können die Organopolysiloxane M- und/oder Q-Einheiten enthalten, was jedoch nicht bevorzugt ist.

Die erfindungsgemäß eingesetzten Organopolysiloxane (A) sind bei 25 °C und dem Druck der umgebenden Atmosphäre, also 900 bis 1100 hPa flüssig.

Vorzugsweise haben die erfindungsgemäß eingesetzten Organopolysiloxane (A) bei 25°C eine Viskosität von 5 bis 5000 mm²/s, besonders bevorzugt 5 bis 500 mm²/s, insbesondere 5 bis 100 mm²/s.

Bevorzugt weisen die erfindungsgemäß eingesetzten Organopolysiloxane (A) ein Gewichtsmittel Mg des Molekulargewichts von 700 bis 200000 g/mol, besonders bevorzugt von 700 bis 10000 g/mol. auf, jeweils gemessen in Toluol gegen Polystyrol als Standard.

Bei dem erfindungsgemäß eingesetzten Organopolysiloxan ist das durchschnittliche Zahlenmittel Mₙ des Molekurgewichts bevorzugt größer 250, besonders bevorzugt 250 bis 5 000, insbesondere 500 bis 3 000, ganz besonders bevorzugt 500 bis 1 500, jeweils gemessen in Toluol gegen Polystyrol als Standard.

Beispiele für die erfindungsgemäß eingesetzte Komponente (A) sind solche Siloxanharze mit den Einheiten
Me₃SiO_{1/2}-,
Me₂SiO_{2/2}-, Me₂Si (OR) O_{1/2}-,
PhMeSiO_{2/2}-, PhMeSi(OR)O_{1/2}-,
Ph₂SiO_{2/2}-, Ph₂Si(OR)O_{1/2}-,
Pr₂SiO_{2/2}-, Pr₂Si(OR)O_{1/2}-,
PhSiO_{3/2}-, PhSi(OR)O_{2/2}-, PhSi(OR)₂O_{1/2}-,
MeSiI_{3/2}-, MeSi(OR)_{2/2}-, MeSi(OR)₂O_{1/2}-,
EtSiO_{3/2}-, EtSi(OR)O_{2/2}-, EtSi(OR)₂O_{1/2}-,
PrSiO_{3/2}-, PrSi(OR)_{2/2}-, PrSi(OR)₂O_{1/2}-,
wobei Organopolysiloxane mit den Einheiten
Me₂SiO_{2/2}-, Me₂Si(OR)O_{1/2}-,
PhSiO_{3/2}-, PhSi(OR)O_{2/2}-, PhSi(OR)₂O_{1/2}-,
MeSiO_{3/2}-, MeSi(OR)_{2/2}-, MeSi(OR)₂O_{1/2}-,
besonders bevorzugt sind,
mit Me gleich Methylrest, Et gleich Ethylrest, Ph gleich Phenylrest, Pr gleich Propylrest und R gleich Methyl-, Ethyl-, Propyl- oder Butylrest.

Komponente (A) sind handelsübliche Produkte bzw. können nach in der Siliziumchemie gängigen Verfahren hergestellt werden.

Beispiele für erfindungsgemäß eingesetzte Titanchelatkomplexe (B) sind Titanacetylacetonate wie (i-C₃H₇O)₂Ti(C₅H₇O₂)₂ CAS-Nr. [17927-72-9], (i-C₃H₇O) (C₄H₅O)Ti(C₅H₇O₂) CAS-Nr. [97281-09-9], (i-C₃H₇O) (C₂H₅O)Ti(C₅H₇O₂)₂ CAS-Nr. [68568-02-7] Diisopropoxy-bis(ethylacetessigester) Titanat (i-C₃H₇O)₂Ti(C₆H₉O₃)₂ CAS-Nr. [27858-32-8], Di-n-butoxy-bisethylacetessigester Titanat (n-C₄H₉O)₂Ti(C₆H₉O₃)₂ CAS-Nr. [20753-28-0], Diisobutoxy-bisethylacetessigester Titanat (i-C₄H₉O)₂Ti(C₆H₉O₃)₂ CAS-Nr. [83877-91-2], Triethanolamin Titanate wie (n-C₃H₇O)₂Ti(C₆H₁₄NO₃)₂ CAS-Nr. [36673-16-2], Milchsäurechelat Titanat CAS-Nr. [65104-06-5] und Isostearoyl Titanat CAS-Nr. [61417-49-0].

Die erfindungsgemäß eingesetzten Titanchelatekomplexe (B) können direkt als solche eingesetzt werden oder in-situ aus den Titanaten und den Chelatliganden während der Herstellung der erfindungsgemäßen Zusammensetzung gebildet werden, wobei bevorzugt die reinen Titanchelatkomplexe (B) eingesetzt werden.

Bei der erfindungsgemäß eingesetzten Komponente (B) handelt es sich bevorzugt um
Bis(ethyl-acetoacetato-O1',O3)bis(propan-2-olato)titan, CAS-Nr. [27858-32-8,
Bis(pentan-2,4-dionato-O,O')bis(propan-2-olato)titan , CAS-Nr. [17927-72-9],
Ethoxybis(pentan-2,4-dionato-O,O')(propan-2-olato)titan, CAS-Nr. [68586-02-7],
Bis(ethyl-acetoacetato-O1',O3)bis(isobutan-1-olato)titan, CAS-Nr. [83877-91-2] und
Bis(ethyl-acetoacetato-O1',O3)bis(n-butan-1-olato)titan, CAS-Nr. [20753-28-0], besonders bevorzugt um
Bis(ethyl-acetoacetato-O1',O3)bis(propan-2-olato)titan, CAS-Nr. [27858-32-8],
Bis(ethyl-acetoacetato-O1',O3)bis(isobutan-1-olato)titan, CAS-Nr. [83877-91-2] und
Bis(ethyl-acetoacetato-O1',O3)bis(n-butan-1-olato)titan, CAS-Nr. [20753-28-0].

Komponente (B) kann als Reinstoff oder im Gemisch mit Lösungsmittel eingesetzt werden. Bevorzugt handelt es sich bei den Lösungsmitteln, mit denen Komponente (B) vermischt werden kann um Alkohole, wie Methanol, Ethanol, 1-Propanol, 2-Propanol, n-Butanol, 2-Butanol und Isobutanol, wobei der den Alkoxygruppen des eingesetzten Titanats entsprechende Alkohol besonders bevorzugt ist.

Die erfindungsgemäß eingesetzten Titanchelatkomplexe (B) sind kommerziell verfügbar bzw. nach bekannten chemischen Methoden darstellbar. Kommerziell erhältliche Beispiele sind
Tyzor® AA, AA-65, AA-75, AA-105, GBA, GBO, DC, TE, PITA von Du-Pont, USA;
VERTEC™ XL 165, KE2, KE4, KE6 von Johnson Matthey Catalysts, England, und
TYTAN™ S2, S4, S6 von Borica Co., Taiwan.

Die erfindungsgemäßen Zusammensetzungen enthalten Komponente (B) in Mengen von vorzugsweise 0,001 bis 50 Gewichtsteilen, besonders bevorzugt 0, 1 bis 10 Gewichtsteilen, insbesondere 1 bis 5 Gewichtsteilen, jeweils bezogen auf 100 Gewichtsteile Organopolysiloxan (A).

Zusätzlich zu den oben beschriebenen Komponenten (A) und (B) können die erfindungsgemäßen Zusammensetzungen nun alle weiteren Stoffe enthalten, die auch bisher in vernetzbare Organopolysiloxanzusammensetzungen eingesetzt worden sind, wie z.B. Füllstoffe (C), Pigmente (D), Bindemittel (E) und Additive (F).

Bei den Füllstoffen (C) kann es sich um alle Füllstoffe handeln, die auch bisher in vernetzbaren Siliconmassen eingesetzt werden. Füllstoff ist eine aus Teilchen bestehende, im Anwendungsmedium praktisch unlösliche Substanz, die zur Vergrößerung des Volumens oder Verbesserung technischer Eigenschaften und/oder Beeinflussung optischer Eigenschaften verwendet wird.

Als geeignete Füllstoffe (C) können generell alle im Lackbereich verwendeten Materialien in Betracht kommen, wie z.B. Calciumcarbonate, z.B. Kreide, Calcit, gefälltes Calciumcarbonat; Dolomite (Calcium-Magnesiumcarbonate) ; Siliciumdioxid (Quarzmehl), Pyrogene Kieselsäuren; Silikate, z.B. Talkum, Kaolin, Glimmer und Sulfate, z.B. Schwerspat und sog. Blanc fixe. Beispiele für Füllstoffe (C) sind nicht verstärkende Füllstoffe, also Füllstoffe mit einer BET-Oberfläche von bis zu 50 m²/g, wie Quarz, Diatomeenerde, Calciumsilikat, zirkoniumsilikat, Zeolithe, Metalloxidpulver, wie Aluminium-, Titan-, Eisenoder Zinkoxide bzw. deren Mischoxide, Bariumsulfat, Calciumcarbonat, Gips, Siliciumnitrid, Siliciumcarbid, Bornitrid, Glas- und Kunststoffpulver; verstärkende Füllstoffe, also Füllstoffe mit einer BET-Oberfläche von mindestens 50 m²/g, wie pyrogen hergestellte Kieselsäure, gefällte Kieselsäure, Ruß, wie Furnace- und Acetylenruß und Silicium-Aluminium-Mischoxide großer BET-Oberfläche; faserförmige Füllstoffe, wie Asbest sowie Kunststofffasern.

Die genannten Füllstoffe können hydrophobiert sein, beispielsweise durch die Behandlung mit Organosilanen bzw. -siloxanen oder durch Verätherung von Hydroxylgruppen zu Alkoxygruppen.

Die mittlere Teilchengröße (d₅₀-Wert) der verwendeten Füllstoffe (C) liegt unter 100 µm, bevorzugt kleiner 25 µm, besonders bevorzugt zwischen 0,01 bis 10 µm.

Bei den gegebenenfalls eingesetzten Füllstoffen (C) handelt es sich bevorzugt um Calciumcarbonat, Quarzmehl, pyrogene Kieselsäuren, Silikate wie Talkum, Kaolin, Glimmer und/oder Sulfate wie z.B. Schwerspat und Blanc fixe.

Falls die erfindungsgemäßen Zusammensetzungen Komponente (C) enthalten, handelt es sich um Mengen von vorzugsweise 0,1 bis 200 Gewichtsteilen, besonders bevorzugt 1 bis 100 Gewichtsteilen, insbesondere 10 bis 100 Gewichtsteilen, jeweils bezogen auf 100 Gewichtsteile Organopolysiloxan (A).

Die erfindungsgemäßen Zusammensetzungen enthalten bevorzugt Füllstoffe (C).

Bei den Pigmenten (D) kann es sich um alle Pigmente handeln, die auch bisher in vernetzbaren Siliconmassen eingesetzt werden.

Beispiele für gegebenenfalls eingesetzte Pigmente (D) sind Erdpigmente, wie Kreide, Ocker, Umbra und Grünerde, Mineralpigmente, wie Titandioxid (Anatas und Rutil-Typen), Chromoxidgrün-Pigmente, Chromgelb, Mennige, Zinkweiß, Zinkoxidpigmente, Zinksulfidpigmente, Lithopone, Zinkgelb, Zinkgrün, Pigmentruße (Gas-, Furnace- oder Flammrußtypen), Eisenoxid-Pigmente (Eisenoxidgelb, Eisenoxidrot, Eisenoxidschwarz, Eisenoxidbraun), Cadmiumpigmente (Cadmiumgelb, -orange, -rot), Kobaltblau, Ultramarin-Pigmente, Eisenblau-Pigmente und Bismutvanadatpigmente, sowie organische Pigmente, wie Sepia, Kasseler Braun, Indigo, Azo-Pigmente, Antrachinoide-, Indigoide-, Dioxazin-, Chinacridon-, Phthalocyanin-, Isoindolinon- und Alkaliblau-Pigmente, wobei viele der anorganischen Pigmente auch als Füllstoffe fungieren und umgekehrt.

Die Aluminiumpigmente (D), welche in der erfindungsgemäßen Organopolysiloxanzusammensetzung optional anwesend sein können, sind typischerweise plättchenförmig mit Formfaktoren (Dicke zu Durchmesser) von 1:50 bis 1:500. Sowohl sog. "leafing" als auch "non-leafing" Typen können eingesetzt werden.

Der Zusatz von Korrosionsschutzpigmenten (D) wie Zinkstaub oder Trizinkbis(orthophosphat) * 2-4 H₂O, Zinkoxid oder Gemischen , und Modifikationen ist möglich und sind dem Fachmann bekannt.

Bei den gegebenenfalls eingesetzten Pigmenten (D) handelt es sich bevorzugt um hitzebeständige Pigmente, besonders bevorzugt um hitzebeständige anorganischer Pigmente, wie Rutile, Spinelle, Hematite. Beispiele für hitzebeständige anorganische Pigmente sind dem Fachmann bekannt, dazu gehören unter anderem Schwarzpigmente wie synthetische gemischte Eisen-Mangan-Oxide (z.B. Bayferrox 303T, Lanxess), Mangan-Eisen-Spinelle (z.B. PK 3060, Ferro Corp.) oder Kupfer-Chromit Spinelle (z.B. PK 3095, Ferro Corp.). Neben diesen anorganischen Pigmenten können auch Ruß-Sorten als Schwarzpigment dienen.

Bei den gegebenenfalls eingesetzten Pigmenten (D) handelt es sich besonders bevorzugt um hitzestabile Pigmente wie z.B.
- (Pigment-)Ruße,
- anorganische Mischoxidphasenpigmente vom Spinell, Rutil, Hematit oder Phosphattyp,
- Aluminiumpigmente,
- Titandioxid und
- Zinkstaub,
insbesondere um synthetische anorganische Schwarzpigmente wie gemischte Eisen-Mangan-Oxide (Fe,Mn)₂O₃ CAS-Nr [12062-81-6, 75864-23-2], Mangan-Eisen-Spinelle CAS-Nr. [68186-94-7], Kupfer-Chrom-Spinelle CAS-Nr. [68186-91-4], Aluminiumpigmente und Pigmentruße.

Die Schwarzpigmente sind u.a. kommerziell erhältlich unter den Handelsnamen PK-3060 und PK-3095 von Ferro Corp., USA oder Bayferrox 303T von Lanxess, Deutschland oder Ferritan 2400 von Rockwood Pigments, UK.

Aluminiumpigmente sind kommerziell erhältlich unter dem Handelsnamen STAPA® von Eckart, Deutschland, z.B. STAPA® Pasten 2, 4 oder 6.

Pigmentruße sind kommerziell erhältlich, z.B. von Evonik, Deutschland.

Falls die erfindungsgemäßen Zusammensetzungen Komponente (D) enthalten, handelt es sich um Mengen von vorzugsweise 0,1 bis 100 Gewichtsteilen, besonders bevorzugt 1 bis 100 Gewichtsteilen, insbesondere 5 bis 80 Gewichtsteilen, jeweils bezogen auf 100 Gewichtsteile Organopolysiloxanharz (A) .

Die erfindungsgemäßen Zusammensetzungen enthalten bevorzugt Pigmente (D).

Bei den Bindemitteln (E) kann es sich um alle Bindemittel handeln, die auch bisher in vernetzbaren Siliconmassen eingesetzt werden.

Beispiele für gegebenenfalls eingesetzte Bindemittel (E) sind Alkylorthosilikate und/oder deren Hydrolysate, wobei die Alkylsubstituenten bevorzugt 1 bis 8 Kohlenstoffatome enthalten, besonders bevorzugt den Ethylrest darstellen. Das hydrolysierte Alkylorthosilikat ist vorzugsweise eine Mischung aus monomeren und verschiedenen oligomeren, cyclischen Kondensationsprodukten von Alkylorthosilikat und kann als Polymer betrachtet werden. Dieses Kondensationsprodukt wird charakterisiert durch einen Gehalt von bevorzugt 28 bis 50 Gew.-% an Siliciumdioxid, besonders bevorzugt von 40 bis 45 Gew.-%. Solche Alkylsilikate sowie hydrolysierte Alkylsilikate sind dem Fachmann bekannt und kommerziell erhältlich, wie z.B. unter dem Handelsnamen "Silikat TES 40 WN" bei der Wacker Chemie AG, D-München.

Weitere Beispiele für Komponente (E) sind organische Bindemittel, insbesondere filmbildende Bindemittel wie z.B. Acrylharze, Polyesterharze, Alkydharze, Polyole und Kohlenwasserstoffharze.

Bei den gegebenenfalls eingesetzten Bindemittel (E) handelt es sich bevorzugt um Alkylorthosilikate und/oder deren Hydrolysate.

Falls die erfindungsgemäßen Zusammensetzungen Komponente (E) enthalten, handelt es sich um Mengen von vorzugsweise 0,1 bis 50 Gewichtsteilen, besonders bevorzugt 0,1 bis 10 Gewichtsteilen, insbesondere 0,1 bis 5 Gewichtsteilen, jeweils bezogen auf 100 Gewichtsteile Organopolysiloxanharz (A).

Die erfindungsgemäßen Zusammensetzungen enthalten bevorzugt keine Komponente (E).

Die erfindungsgemäßen Zusammensetzungen können Additive (F) enthalten, wie z.B. Entschäumer, Entlüfter, Gleit- und Verlaufsmittel, organische Lösungsmittel, Dispergier- und netzhilfsstoffe, Substratnetzadditive, Thixotropiermittel, Wasserfänger und Haftvermittler.

Art und Menge der gegebenenfalls eingesetzten Additive (F) hängen in erster Linie von der jeweiligen Anwendung der erfindungsgemäßen Organopolysiloxanzusammensetzung ab.

Die erfindungsgemäßen Zusammensetzungen enthalten bevorzugt keine Additive (F).

Bei den erfindungsgemäß eingesetzten Komponenten kann es sich jeweils um eine Art einer solchen, Komponente wie auch um ein Gemisch aus mindestens zwei Arten einer jeweiligen Komponente handeln.

Bei den erfindungsgemäßen Organopolysiloxanzusammensetzungen handelt es sich bevorzugt um solche, die herstellbar sind unter Verwendung von
(A) Organopolysiloxanen bestehend aus Einheiten der Formel (1),
(B) Titanchelatkomplexen,
   gegebenenfalls
(C) Füllstoffen, gegebenenfalls
(D) Pigmenten,
   gegebenenfalls
(E) Bindemitteln
   und gegebenenfalls
(F) Additiven.

Die erfindungsgemäßen Zusammensetzungen enthalten außer den Komponenten (A) bis (F) bevorzugt keine weiteren Komponenten.

Bei den erfindungsgemäßen Zusammensetzungen kann es sich um Lösungen oder Dispersionen handeln.

Die erfindungsgemäßen Zusammensetzungen sind bevorzugt bei 25°C und dem Druck der umgebenden Atmosphäre niedrigviskose Flüssigkeiten.

Die erfindungsgemäßen Zusammensetzungen haben vorzugsweise eine Viskosität von 5 bis 3000 mm²/s, besonders bevorzugt von 5 bis 500 mm²/s, jeweils bei 25°C.

Die erfindungsgemäßen Zusammensetzungen haben vorzugsweise einen flüchtigen organischen Inhalt (VOC) von weniger als 500 Gramm pro Liter, besonders bevorzugt einen VOC Gehalt von weniger als 250 Gramm pro Liter, jeweils bestimmt mit der EPA-Methode 24 (EPA: US Environmental Protection Agency). Die Alkohole, die bei der Vernetzung der erfindungsgemäßen Organopolysiloxanzusammensetzung freigesetzt werden können, sind im VOC-Wert enthalten.

Der Festgehalt der erfindungsgemäßen Organopolysiloxanzusammensetzung ist bevorzugt höher als 60 Gew.-%, besonders bevorzugt höher als 80 Gew.-%, insbesondere 80 bis 99 Gew.-%, jeweils bezogen auf das Gewicht der Gesamtzusammensetzung.

Zur Bereitung der erfindungsgemäßen Zusammensetzungen können alle Bestandteile in beliebiger Reihenfolge miteinander vermischt werden. So wird bevorzugt die Polyorganosiloxankomponente (A) zunächst mit den optionalen Komponenten, wie Füllstoffe (C), Pigmente (D), Bindemittel (E) und Additive (F), gemischt. Dieses Vermischen kann bei Raumtemperatur und dem Druck der umgebenden Atmosphäre, also etwa 900 bis 1100 hPa, erfolgen. Falls erwünscht, kann dieses Vermischen aber auch bei höheren Temperaturen erfolgen, z.B. bei Temperaturen im Bereich von 35 bis 135°C. Weiterhin ist es möglich, zeitweilig oder ständig unter vermindertem Druck zu mischen, wie z.B. bei 30 bis 500 hPa Absolutdruck, um flüchtige Verbindungen oder Luft zu entfernen. Die Komponente (B) wird bevorzugt erst am Ende der Herstellung zugegeben. Dies kann auch erst unmittelbar vor der Verarbeitung der erfindungsgemäßen Organopolysiloxanzusammensetzung erfolgen.

Insbesondere erfolgt die Herstellung der erfindungsgemäßen Organopolysiloxanzusammensetzungen durch Mischen der flüssigen Komponenten und Dispergieren der darin unlöslichen Komponenten durch dem Fachmann bekannte Verfahren wie Dissolver, Walzwerke (Dreiwalze oder Rührwerkskugelmühlen) bis zur gewünschten Kornfeinheit.

Ein weiterer Gegenstand der vorliegenden Erfindung ist ein Verfahren zur Herstellung der erfindungsgemäßen Organopolysiloxanzusammensetzungen durch Mischen der einzelnen Bestandteile.

Bevorzugt erfolgt die Herstellung der erfindungsgemäßen Zusammensetzung unter weitgehendem Ausschluss von Feuchtigkeit.

Für die Vernetzung der erfindungsgemäßen Zusammensetzungen reicht der übliche Wassergehalt der Luft aus. Die Vernetzung der erfindungsgemäßen Massen erfolgt vorzugsweise bei Raumtemperatur. Sie kann, falls erwünscht, auch bei höheren oder niedrigeren Temperaturen als Raumtemperatur, z.B. bei -5° bis 15°C oder bei 30°C bis 200°C und/oder mittels des normalen Wassergehalts der Luft übersteigenden Konzentrationen von Wasser durchgeführt werden. Auch das direkte Zumischen von Wasser oder Verbindungen, welche Wasser abspalten können, ist möglich.

Vorzugsweise wird die Vernetzung beim Druck der umgebenden Atmosphäre, also etwa 900 bis 1100 hPa, durchgeführt.

Ein weiterer Gegenstand der vorliegenden Erfindung sind Formkörper, insbesondere Beschichtungen, hergestellt durch Vernetzung der erfindungsgemäßen Zusammensetzungen.

Die erfindungsgemäßen Zusammensetzungen können für alle Verwendungszwecke eingesetzt werden, für die unter Ausschluss von Wasser lagerfähige, bei Zutritt von Wasser bei Raumtemperatur vernetzende Massen eingesetzt werden können.

Die erfindungsgemäßen Massen eignen sich somit ausgezeichnet zur Herstellung von Beschichtungen.

Die erfindungsgemäßen vernetzbaren Zusammensetzungen werden vorzugsweise zur Herstellung von Beschichtungen verwendet. Die Beschichtungen werden hergestellt durch Auftragen der erfindungsgemäßen vernetzbaren Zusammensetzungen auf die zu beschichtenden Oberflächen und anschließende Härtung der Zusammensetzungen.

Das Auftragen von den erfindungsgemäßen Zusammensetzungen auf die zu beschichtenden Oberflächen kann in beliebiger, für die Herstellung von Beschichtungen aus flüssigen Stoffen geeigneter und vielfach bekannter Weise erfolgen, beispielsweise durch Tauchen, Streichen, Gießen, Sprühen, wie z.B. Airless-Sprühapplikation bzw. konventioneller Sprühapplikation.

Bei den zu beschichtenden Oberflächen, die im Rahmen der Erfindung behandelt werden können, kann es sich um Oberflächen beliebiger bei Raumtemperatur und 1012 hPa fester Stoffe handeln. Beispiele für derartige Oberflächen sind diejenigen von Holz, keramischen Gegenständen, Glas, einschließlich Glasfasern, Metallen, Verbundwerkstoffen.

Bevorzugt handelt es sich bei den zu beschichtenden Oberflächen um Metalle, besonders bevorzugt um Eisen, Stahl und Aluminium(legierungen).

Die Aushärtung der erfindungsgemäßen Organopolysiloxanzusammensetzung mit Luftfeuchte erfolgt besonders rasch, wenn sie als dünner Film mit einer Schichtstärke von bevorzugt weniger als 500 µm, besonders bevorzugt 5 bis 200 µm, insbesondere 5 bis 100 µm, auf Oberflächen, wie z.B. solchen aus Metall, aufgebracht wird.

Die erfindungsgemäßen Organopolysiloxanzusammensetzungen vernetzen vorteilhafterweise bei Umgebungstemperatur schnell zu einem harten, hochmolekularen Organopolysiloxanfilm, sobald sie in dünner Schicht auf eine Oberfläche aufgebracht werden und mit Feuchtigkeit in Kontakt kommen, wobei die mit der erfindungsgemäßen Silikonharzzusammensetzung beschichten Gegenstände dann sehr schnell weiter bearbeitet werden können.

Die ausgehärteten Organopolysiloxanzusammensetzungen weisen eine Pendelhärte nach König (DIN EN ISO 1522) von mindestens 30, bevorzugt 40, besonders bevorzugt mehr als 50 Pendelschwingungen auf.

Zur Vernetzung der erfindungsgemäßen Organopolysiloxanzusammensetzung ist im Allgemeinen kein Aufheizen notwendig. Die ausgehärtete Organopolysiloxanzusammensetzung schützt Metallgegenstände bereits bei reiner Raumtemperaturvernetzung vor Korrosion und Chemikalien. Die gute Chemikalienbeständigkeit, die erfindungsgemäß erzielt wird, ist ein eindeutiger Hinweis auf den hohen Vernetzungsgrad des bei Umgebungstemperatur ausgehärteten Harzfilms. Es ist aber auch möglich, dass bei Raumtemperatur die Vernetzung nur teilweise abläuft. Ein zusätzliches Aufheizen der Beschichtung, z.B. auf 200°C, kann dann zu vollständiger Vernetzung führen und so Eigenschaften wie Korrosionsbeständigkeit oder mechanische Eigenschaften weiter verbessern.

Die erfindungsgemäße Beschichtung ist insbesondere geeignet zum Korrosionsschutz von Metallen, wie z.B. allen Arten von Stahlbauten. Die beschichteten Oberflächen können direkt der Umgebung ausgesetzt sein oder auch unter einer Isolierschicht liegen. Der ausgehärtete Organopolysiloxanfilm der vorliegenden Erfindung ist vorteilhafterweise auch beständig gegenüber Temperaturwechselbelastungen, wie etwa Abschrecken in kaltem Wasser oder plötzlichem Kontakt mit Hitze.

Die erfindungsgemäßen Organopolysiloxanzusammensetzungen sind optimal geeignet zur Beschichtung von Baustahl in der chemischen Prozessindustrie, Offshore-Bohrinseln, der Petrochemie oder Kraftwerken. Dies beinhaltet alle Arten von Raffinerien, Prozesseinheiten, Rohrleitungen, Schornsteine, Behälter, Fackelanlagen, Abgasanlagen, Öfen, Außenbereiche von Reaktoren, Kraftwerke, Schlote und anderen Strukturen die hohen oder niedrigen Temperaturen ausgesetzt sind.

Die erfindungsgemäßen Massen haben den Vorteil, dass sie leicht herzustellen sind, sich durch eine sehr hohe Lagerstabilität auszeichnen und schnell vernetzbar sind.

Die erfindungsgemäße Organopolysiloxanzusammensetzung hat des Weiteren den Vorteil, dass eine Sprühapplikation bei Anwendungstemperaturen im Bereich -5 bis +40°C durchgeführt werden kann.

Ferner haben die erfindungsgemäßen Organopolysiloxanzusammensetzungen den Vorteil, dass sie niedrigviskos sind und einen geringen Anteil an flüchtigen organischen Verbindungen (volatile organic compounds, VOC) haben.

Die erfindungsgemäßen Beschichtungen haben den Vorteil, dass sie hitze- und rissbeständig sind, auch bei hohen Temperaturen und cyclischen Temperaturwechseln. Bevorzugt sind dabei Beschichtungen, die einem sogenannten Schocktest widerstehen. Dabei wird der vernetzte Film auf einer Metalloberfläche auf eine Temperatur von 400, 500 oder 600°C erhitzt und dann in ein Wasserbad getaucht, welches Raumtemperatur aufweist. Bevorzugt übersteht der erfindungsgemäße vernetzte Organopolysiloxanfilm auch schnelles Aufheizen unbeschadet, z.B. wenn er in einen 500°C heißen Ofen gelegt wird.

Die nachstehend beschriebenen Beispiele werden, sofern nicht anders angegeben, bei einem Druck der umgebenden Atmosphäre, also etwa bei 1000 hPa, und bei Raumtemperatur, also bei etwa 23°C, bzw. bei einer Temperatur, die sich beim Zusammengeben der Reaktanden bei Raumtemperatur ohne zusätzliche Heizung oder Kühlung einstellt, sowie bei einer relativen Luftfeuchtigkeit von etwa 50 % durchgeführt. Des Weiteren beziehen sich alle Angaben von Teilen und Prozentsätzen, soweit nichts anderes angegeben ist, auf das Gewicht.

In den Beispielen wird die Klebfreiheit wie folgt bestimmt. Es wird mittels festen Aufdrücken mit dem Daumen geprüft, ob sich noch eine Oberflächenbeschädigung bzw. -veränderung ergibt.

Im Folgenden bedeutet Me den Methylrest und Ph den Phenylrest.

### Beispiel 1

Jeweils 100 g eines flüssigen Organopolysiloxanes mit einer Viskosität von 25 mPas bei 25°C und der durchschnittlichen Strukturformel MeSi(OMe)_{0,8}O_{1,1} bestehend aus 21 Mol% [Me-Si(OMe)₂O_{1/2}], 46 Mol% [MeSi(OMe)O_{2/2}] und 33 Mol% [MeSiO_{3/2}] Bausteinen und einem durchschnittlichen Zahlenmittel Mₙ des Molekulargewichts von 800 g/mol wurden mit jeweils 5 g der in Tabelle 1 genannten Titankomponenten gemischt und die Mischung mit einer Rakel als Film auf eine Stahloberfläche aufgetragen. Unter Normbedingungen (23°C/50% rel. Feuchte) wurden die Zeiten bis zur Klebfreiheit des Films bestimmt. Die Ergebnisse finden sich in Tabelle 1.

**Tabelle 1**

| **Beispiel** | **Titan-komponente** | **Handelsname** | **Klebfrei nach [min]** |
|---|---|---|---|
| 1.1 | Bis(ethyl-acetoacetato-O1,O3)-bis(propan-2-olato)titan | Tyzor® PITA | 10 |
| 1.2 | Bis(ethyl-acetoacetato-O1,O3)-bis(propan-2-olato)titan | Tytan™ S2 | 10 |
| V1.1 | Polybutyltitanat | Tytan™ PBT | 20 |
| V1.2 | Polybutyltitanat | Vertec PBT | 22 |
| V1.3 | Tetra-n-butyltitanat | Tyzor® BTM | 20 |
| V1.4 | Tetra-iso-propyltitanat | Vertec XL 110 | 22 |
| V1.5 | Tetra-ethyltitanat | Tyzor® ET | Ausfällung |
| V1.6 | Tetra-ethyltitanat | Tytan™ TET | Ausfällung |
| V1.7 | Titan Phosphat | Tyzor® IAM | 110 |

Die genannten Tylan™-Produkte sind erhältlich bei Borica Co., Ltd., Taiwan;
Die genannten Tyzor®-Produkte sind erhältlich bei E.I. du Pont de Nemours USA;
Die genannten Vertec™-Produkte sind erhältlich bei Johnson-Matthey Catalysts, England.

### Vergleichsbeispiel V1

Die in Beispiel 1 beschriebene Verfahrensweise wird mit verschiedenen Tetraalkyltitanaten und Titanphosphat gemäß Tabelle 1 wiederholt. Die Ergebnisse finden sich in Tabelle 1.

### Beispiel 2

100 g eines flüssigen Organopolysiloxanes mit der Viskosität von 400 mPas bei 25°C und der durchschnittlichen Strukturformel PhSi (OMe)_{1,04}O_{0,96} (bestehend aus 27 Mol% [PhSi (OMe)₂O_{1/2})], 51 Mol% [PhSi(OMe)O_{2/2}], 22 Mol% [PhSiO_{3/2}] Einheiten) sowie einem durchschnittlichen Zahlenmittel Mₙ des Molekulargewichts von 700 g/mol wurden mit 7 g des Titanchelates TYZOR® PITA versetzt und auf eine Stahloberfläche aufgetragen.

Unter Normbedingungen (23°C/50% rel. Feuchte) war die Mischung nach 4,5 h zu einem harten, klebfreien Film ausgehärtet.

### Vergleichsbeispiel V2

Die in Beispiel 2 beschriebene Verfahrensweise wird wiederholt mit der Abänderung, dass anstelle des Titanchelates 7 g n-Bu-tyltitanat eingesetzt wurden.

Der Film zeigte nach 24 h keine Aushärtung und war noch flüssig.

### Beispiel 3

50,8 g des in Beispiel 1 beschriebenen Organopolysiloxanes, 33,8 g Aluminiumpigment (käuflich erhältlich unter der Bezeichnung "STAPA 2 leafing" bei der Fa. Eckart Effect Pigments, Deutschland), 3,4 g einer 15%-Dispersion einer hochdispersen Kieselsäure in Xylol (käuflich erhältlich unter der Bezeichnung HDK® H13L bei der Wacker Chemie AG, D-Deutschland) und 6,7 g aromatisches Kohlenwasserstoffgemisch mit einem Siedebereich von 155-181°C (käuflich erhältlich unter der Bezeichnung SolvessoTM 100 bei Silbermann, Deutschland) werden miteinander vermischt und in einem Labordissolver bei 800 Upm für 15 min dispergiert.

Anschließend werden 1,7 g Vinyltrimethoxysilan (käuflich erhältlich unter der Bezeichnung GENIOSIL® XL 10 bei der Wacker Chemie AG, D-Deutschland) und 3,6 g Titanchelat Tyzor® PITA werden bei einer Drehzahl von 800 Upm eingerührt.

Die so erhaltene Organopolysiloxanzusammensetzung vernetzt unter Standardbedingungen (23°C/50% rel. Feuchte) als dünner Film (100 µm Nassfilmstärke) auf Stahlpanel aufgetragen in weniger als 15 Minuten zu einem silberfarbigen harten Film. Die Pendelhärte, bestimmt 24h nach dem Auftrag, betrug 58 Schwingungen.

### Beispiel 4

49,7 g des in Beispiel 1 beschriebenen Organopolysiloxanes, 10,7 g eines Talk/Quartz/Chlorit-Gemisches (käuflich erhältlich unter der Bezeichnung Plastorit 0000 bei der Fa. Luzenac, Frankreich), 10,7 g Korrosionsschutzpigment (käuflich erhältlich unter der Bezeichnung Heucophos® ZCPplus bei der Fa. Heubach, Deutschland), 14,2 g Schwarzpigment (käuflich erhältlich unter der Bezeichnung Ferro PK 3095 bei Ferro Corporation, USA) und 1,4 g einer 15%-Dispersion einer hochdispersen Kieselsäure in Xylol (käuflich erhältlich unter der Bezeichnung HDK® H13L bei der Wacker Chemie AG, D-Deutschland) werden miteinander vermischt und in einem Labordissolver bei 5000 Upm für 15 min dispergiert.

Anschließend werden 7,1 g Aluminiumpigment (käuflich erhältlich unter der Bezeichnung "Blitz Alupowder 7825" der Fa. Benda-Lutz, Österreich) bei einer Drehzahl von 800 Upm eingerührt sowie danach werden 2,0 g Vinyltrimethoxysilan (käuflich erhältlich unter der Bezeichnung GENIOSIL® XL 10 bei der Wacker Chemie AG, D-Deutschland) und 4,3 g Titanchelat Tyzor® PITA bei einer Drehzahl von 800 Upm eingerührt.

Die so erhaltene Organopolysiloxanzusammensetzung vernetzt unter Standardbedingungen (23°C/50% rel. Feuchte) als dünner Film (100 µm Nassfilmstärke) auf Stahlpanel aufgetragen in weniger als 15 Minuten zu einem graumetallic-farbigen, harten Film. Die Pendelhärte, bestimmt 24h nach dem Auftrag, betrug 73 Schwingungen.

### Beispiel 5

49,8 g des in Beispiel 1 beschriebenen organopolysiloxanes, 10,7 g Talk (käuflich erhältlich unter der Bezeichnung Talcum EL10 bei der Fa. Luzenac, Frankreich), 3,0 g Korrosionsschutzpigment (käuflich erhältlich unter der Bezeichnung Heucophos® ZCPplus bei der Fa. Heubach, Deutschland), 10,0 g Schwarzpigment (käuflich erhältlich unter der Bezeichnung Ferro PK 3095 bei Ferro Corporation, USA) und 1,0 g einer 15%-Dispersion einer hochdispersen Kieselsäure in Xylol (käuflich erhältlich unter der Bezeichnung HDK® H13L bei der Wacker Chemie AG, D-Deutschland) werden miteinander vermischt und in einem Labordissolver bei 5000 Upm für 15 min dispergiert.

Anschließend werden 5,0 g des in Beispiel 1 beschriebenen Organopolysiloxanes, 1,4 g Vinyltrimethoxysilan (käuflich erhältlich unter der Bezeichnung GENIOSIL® XL 10 bei der Wacker Chemie AG, D-Deutschland) und 3,0 g Titanchelat Tyzor® PITA bei einer Drehzahl von 800 Upm eingerührt.

Die so erhaltene Organopolysiloxanzusammensetzung vernetzt unter Standardbedingungen (23°C/50% rel. Feuchte) als dünner Film (100 µm Nassfilmstärke) auf Stahlpanel aufgetragen in weniger als 15 Minuten zu einem schwarzen harten Film. Die Pendelhärte, bestimmt 24h nach dem Auftrag, betrug 75 Schwingungen.

### Vergleichsbeispiel V3

23,0 g des in Beispiel 1 beschriebenen Organopolysiloxanes, 1,7 g n-Butyltitanat, 37,0 g Aluminiumpigment (käuflich erhältlich unter der Bezeichnung STAPA 2 bei der Fa. Eckart, Deutschland), 8,3 g Ethylcellulose (käuflich erhältlich unter der Bezeichnung Aqualon EC N 22 bei der Fa. Hercules, USA) und 30,0 g Xylol werden in einem Labordissolver bei ca. 800 upm für 10 min dispergiert.

Die so erhaltene Organopolysiloxanzusammensetzung benötigt unter Standardbedingungen (23°C/50% rel. Feuchte), als dünner Film (100 µm Nassfilmstärke) auf Stahlpanel aufgetragen mehr als 40 Minuten zur Aushärtung zu einem silberfarbigen harten Film.

### Beispiel 6

80 g des in Beispiel 1 beschriebenen Organopolysiloxanes, 60 g Talk (käuflich erhältlich unter der Bezeichnung Talcum EL10 bei der Fa. Luzenac, Frankreich), 20 g Schwarzpigment (käuflich erhältlich unter der Bezeichnung Ferro PK 3095 bei Ferro Corporation, USA), 4 g Bentone 38 (15% Dispersion in Xylol) (käuflich erhältlich unter der Bezeichnung Bentone 38 bei Elementis Specialities, 1831 Diegem, Belgium) und 30 g Xylol werden miteinander vermischt und in einem Labordissolver bei 5000 Upm für 15 min dispergiert.

### Anschließend werden 5,6 g Titanchelat Tyzor® PITA eingerührt.

Teile der so erhaltenen Organopolysiloxanzusammensetzung werden nun für die in Tabelle 2 angegebenen Zeitspannen bei 70°C gelagert und dann als dünnen Film (100 µm Nassfilmstärke) jeweils auf Stahlpanel aufgetragen und unter Standardbedingungen (23°C/50% rel. Feuchte) vernetzen gelassen sowie die Zeit bis zur Klebfreiheit bestimmt. Die Ergebnisse finden sich in Tabelle 2.

**Tabelle 2:**

| | **Klebfrei nach [min]** | |
|---|---|---|
| **Lagerung bei 70°C in [d]** | **Vergleichsbeispiel V4** | **Beispiel 6** |
| 0 | 40 | 10 |
| 7 | 33 | 8 |
| 14 | 33 | 8 |
| 28 | Probe in Flasche geliert | 7 |

### Vergleichsbeispiel V4

Die in Beispiel 6 beschriebene Verfahrensweise wird wiederholt mit der Abänderung, dass anstelle von 5,6 g des Titanchelates 5,6 g Poly-n-Butyltitanat, CAS 9022-96-2, eingesetzt wurden. Die Ergebnisse finden sich in Tabelle 2.

### Beispiel 7

100 g eines flüssigen Organopolysiloxanes mit einer Viskosität von 5 mPas bei 25°C bestehend aus 9 Mol%-% Me₂SiO_{1/2}(OMe), 11 Mol-% Me₂SiO_{2/2}, 27 Mol-% MeSiO_{1/2}(OMe)₂, 38 Mol-% MeSiO_{2/2}(OMe) und 15 Mol-% MeSiO_{3/2}-Einheiten und einem durchschnittlichen Zahlenmittel Mₙ des Molekulargewichts von 500 g/mol wurde mit 5 g Titanchelat Tyzor® PITA gemischt und als dünner Film auf eine Stahloberfläche aufgetragen. Unter Normbedingungen (23°C/50% rel. Feuchte) wurden die Zeiten bis zur Klebfreiheit des Films bestimmt. Die Ergebnisse finden sich in Tabelle 3.

**Tabelle 3:**

| | **Klebfrei nach [min]** |
|---|---|
| Beispiel 7 | 19 |
| Vergleichsbeispiel V5 | 50 |

### Vergleichsbeispiel V5

Die in Beispiel 7 beschriebene Verfahrensweise wird wiederholt mit der Abänderung, dass anstelle von 5 g des Titanchelates 7 g Poly-n-Butyltitanat, CAS 9022-96-2, eingesetzt wurden.

Die Ergebnisse finden sich in Tabelle 3.

### Beispiel 8

100 g eines flüssigen Organopolysiloxanes mit einer Viskosität von 450 mPas bei 25°C und einer durchschnittlichen Strukturformel Ph_{0,6}Me_{0,46}Si(OMe)_{0,8}O_{1,13} (bestehend aus 5 Mol- % [Me₂SiO_{2/2}], 5 Mol% [MeSi(OMe)₂O_{1/2}], 15 Mol% [MeSi(OMe)O_{2/2}], 16 Mol% [Me-SiO_{3/2}], 14 Mol% [PhSi(OMe)₂O_{1/2}], 27 Mol% [PhSi(OMe)O_{2/2}], 18 Mol% [PhSiO_{3/2}] Einheiten) und einem durchschnittlichen Zahlenmittel Mₙ des Molekulargewichts von 800 g/mol wurde jeweils mit 7 g des Titanchelates TYZOR® PITA versetzt und auf eine Stahloberfläche aufgetragen.

Unter Normbedingungen (23°C/50% rel. Feuchte) war die Mischung nach 2 h zu einem harten, klebfreien Film ausgehärtet.

### Vergleichsbeispiel V6

Die in Beispiel 8 beschriebene Verfahrensweise wird wiederholt mit der Abänderung, dass anstelle des Titanchelates 7 g n-Butyltitanat eingesetzt wurden.

Der Film zeigte nach 12 h keine Aushärtung und war noch klebrig.

## Patentansprüche

1. Vernetzbare Organopolysiloxanzusammensetzungen herstellbar unter Verwendung von
(A) Organopolysiloxan bestehend aus Einheiten der allgemeinen Formel
RₐSi(OR¹)_{b}O_{(4-a-b)/2'} (1),
wobei
R gleich oder verschieden sein kann und einen einwertigen Kohlenwasserstoffrest darstellt,
R¹ gleich oder verschieden sein kann und einen einwertigen, gegebenenfalls substituierten Kohlenwasserstoffrest darstellt, der durch Heteroatome unterbrochen sein kann,
a 0, 1, 2 oder 3 ist und
b 0, 1, 2 oder 3 ist,
mit der Maßgabe, dass die Summe a+b≤3 ist, in mindestens einer Einheit b verschieden 0 ist und in mehr als 50% aller Einheiten der Formel (1) im Organopolysiloxan a gleich 1 ist, wobei Organopolysiloxan (A) bei 25°C und dem Druck der umgebenden Atmosphäre, also 900 bis 1100 hPa, flüssig ist,
und
(B) mindestens einem Titanchelatkomplex.

2. Vernetzbare Organopolysiloxanzusammensetzungen gemäß Anspruch 1, **dadurch gekennzeichnet, dass** die Organopolysiloxane (A) bei 25°C eine Viskosität von 5 bis 5000 mm²/s aufweisen.

3. Vernetzbare Organopolysiloxanzusammensetzungen gemäß einem oder mehreren der Ansprüche 1 bis 2, **dadurch gekennzeichnet, dass** es sich bei Komponente (B) um Bis(ethyl-acetoacetato-O1',O3)bis(propan-2-olato)titan, Bis(ethyl-acetoacetato-O1',O3)bis(isobutan-1-olato)titan oder Bis(ethyl-acetoacetato-O1',O3)bis(n-butan-1-olato)titan handelt.

4. Vernetzbare Organopolysiloxanzusammensetzungen gemäß einem oder mehreren der Ansprüche 1 bis 3, **dadurch gekennzeichnet, dass** sie Komponente (B) in Mengen von 0,001 bis 50 Gewichtsteilen, bezogen auf 100 Gewichtsteile Organopolysiloxan (A), enthalten.

5. Vernetzbare Organopolysiloxanzusammensetzungen gemäß einem oder mehreren der Ansprüche 1 bis 4, **dadurch gekennzeichnet, dass** es sich um solche handelt, die herstellbar sind unter Verwendung von
(A) Organopolysiloxanen bestehend aus Einheiten der Formel (1),
(B) Titanchelatkomplexen,
gegebenenfalls
(C) Füllstoffen,
gegebenenfalls
(D) Pigmenten,
gegebenenfalls
(E) Bindemitteln
und gegebenenfalls
(F) Additiven.

6. Vernetzbare Organopolysiloxanzusammensetzungen gemäß einem oder mehreren der Ansprüche 1 bis 5, **dadurch gekennzeichnet, dass** sie außer den Komponenten (A) bis (F) keine weiteren Komponenten enthalten.

7. Verfahren zur Herstellung der vernetzbaren Organopolysiloxanzusammensetzungen gemäß einem oder mehreren der Ansprüche 1 bis 6 durch Mischen der einzelnen Bestandteile.

8. Formkörper hergestellt durch Vernetzung der vernetzbaren Organopolysiloxanzusammensetzungen gemäß einem oder mehreren der Ansprüche 1 bis 6 bzw. hergestellt nach Anspruch 7.

9. Formkörper gemäß Anspruch 8, **dadurch gekennzeichnet, dass** es sich um Beschichtungen handelt.

## Claims

1. Crosslinkable organopolysiloxane compositions preparable using
(A) organopolysiloxane consisting of units of the general formula
RₐSi(OR¹)_{b}O_{(4-a-b)/2'} (1),
where
R may be identical or different and represents a monovalent hydrocarbon radical,
R¹ may be identical or different and represents a monovalent, optionally substituted hydrocarbon radical which may be interrupted by heteroatoms,
a is 0, 1, 2, or 3, and
b is 0, 1, 2, or 3,
with the proviso that the sum a + b is ≤ 3, in at least one unit b is other than 0, and in more than 50% of all units of the formula (1) in the organopolysiloxane a is 1, with organopolysiloxane (A) being liquid at 25°C and under the pressure of the surrounding atmosphere, in other words 900 to 1100 hPa,
and
(B) at least one titanium chelate complex.

2. Crosslinkable organopolysiloxane compositions according to Claim 1, **characterized in that** the organopolysiloxanes (A) at 25°C have a viscosity of 5 to 5000 mm²/s.

3. Crosslinkable organopolysiloxane compositions according to one or more of Claims 1 to 2, **characterized in that** component (B) comprises bis(ethylacetoacetato-O1',O3)bis(propan-2-olato)-titanium, bis(ethylacetoacetato-O1',O3)bis(isobutan-1-olato)-titanium, or bis(ethylacetoacetato-O1',O3)bis(n-butan-1-olato)-titanium.

4. Crosslinkable organopolysiloxane compositions according to one or more of Claims 1 to 3, **characterized in that** they comprise component (B) in amounts of 0.001 to 50 parts by weight, based on 100 parts by weight of organopolysiloxane (A).

5. Crosslinkable organopolysiloxane compositions according to one or more of Claims 1 to 4, **characterized in that** they are of the kind preparable using
(A) organopolysiloxanes consisting of units of the formula (1),
(B) titanium chelate complexes,
optionally
(C) fillers,
optionally
(D) pigments,
optionally
(E) binders,
and optionally
(F) additives.

6. Crosslinkable organopolysiloxane compositions according to one or more of Claims 1 to 5, **characterized in that** apart from components (A) to (F) they contain no other components.

7. Process for preparing the crosslinkable organopolysiloxane compositions according to one or more of Claims 1 to 6 by mixing the individual constituents.

8. Shaped bodies produced by crosslinking the crosslinkable organopolysiloxane compositions according to one or more of Claims 1 to 6 and/or prepared according to Claim 7.

9. Shaped bodies according to Claim 8, **characterized in that** they are coatings.

## Revendications

1. Compositions d'organopolysiloxanes réticulables, pouvant être préparées avec utilisation
(A) d'organopolysiloxane constitué de motifs de formule générale
RₐSi(OR¹)_{b}O_{(4-a-b)/2'} (1),
dans laquelle
R peut être le même ou différent et représente un radical hydrocarboné monovalent,
R¹ peut être le même ou différent et représente un radical hydrocarboné monovalent, éventuellement substitué, qui peut être interrompu par des hétéroatomes,
a est 0, 1, 2 ou 3 et
b est 0, 1, 2 ou 3,
étant entendu que la somme a+b est ≤ 3, dans au moins un motif b est différent de 0 et dans plus de 50 % de tous les motifs de formule (1)dans l'organopolysiloxane a est égal à 1, l'organopolysiloxane (A) étant liquide à 25°C et sous la pression de l'atmosphère environnante, c'est-à-dire 900 à 1100 hPa,
et
(B) d'au moins un complexe chélate de titane.

2. Compositions d'organopolysiloxanes réticulables selon la revendication 1, **caractérisées en ce que** les organopolysiloxanes (A) présentent à 25 °C une viscosité de 5 à 5 000 mm²/s.

3. Compositions d'organopolysiloxanes réticulables selon une ou plusieurs des revendications 1 et 2, **caractérisées en ce que** le composant (B) consiste en bis(éthyl-acétoacétato-O1',O3)bis(propan-2-olato)-titane, bis(éthyl-acétoacétato-O1',O3)bis(isobutan-1-olato)-titane ou bis(éthyl-acétoacétato-O1',O3)bis(n-butan-1-olato)-titane.

4. Compositions d'organopolysiloxanes réticulables selon une ou plusieurs des revendications 1 à 3, **caractérisées en ce qu'**elles contiennent le composant (B) en des quantités de 0,001 à 50 parties en poids, par rapport à 100 parties en poids d'organopolysiloxane (A).

5. Compositions d'organopolysiloxanes réticulables selon une ou plusieurs des revendications 1 à 4, **caractérisées en ce qu'**il s'agit de celles qui peuvent être préparées avec utilisation
(A) d'organopolysiloxanes constitués de motifs de formule (1),
(B) de complexes de chélates de titane,
éventuellement
(C) de charges,
éventuellement
(D) de pigments,
éventuellement
(E) de liants
et éventuellement
(F) d'additifs.

6. Compositions d'organopolysiloxanes réticulables selon une ou plusieurs des revendications 1 à 5, **caractérisées en ce qu'**en plus des composants (A) à (F) elles ne contiennent pas d'autres composants.

7. Procédé pour la préparation des compositions d'organopolysiloxanes réticulables selon une ou plusieurs des revendications 1 à 6, par mélange des composants individuels.

8. Corps moulés produits par réticulation des compositions d'organopolysiloxanes réticulables selon une ou plusieurs des revendications 1 à 6 ou préparées selon la revendication 7.

9. Corps moulés selon la revendication 8, **caractérisés en ce qu'**il s'agit de revêtements.
